# EUROPEAN PATENT APPLICATION

(11) **EP 1 292 069 A1**
(43) Date of publication of application: **12.03.2003**
(21) Application number: 01121273.5
(22) Date of filing: 05.09.2001
(51) Int. Cl.: H04L 12/28, H04B 17/00

(54) **Device for detecting signal in wireless LAN**

(71) Applicant: Z-Com, Inc., Hsinchu 300 (TW)
(72) Inventor: Ou, Jui Long, Hsinchu, 300 Taiwan (CN); Feng, Chen Chin, Hsinchu, 300 Taiwan (CN)
(74) Representative: Betten & Resch

(57) **Abstract**

A device for detecting a signal of a wireless local area network comprising a portable entity for being taken by a user to find a strength of the signal at a point in the wireless local area network; a wireless transceiver located in the portable entity for receiving the signal; a controller located in the portable entity and electrically connected to the wireless transceiver for processing the signal and producing a result; and a controllable panel located on the portable entity and electrically connected to the controller for displaying a message about a distribution status of the signal to the user according the result.

## Description

### FIELD OF THE INVENTION

The present invention is related to a device for detecting the signal in a wireless LAN(Local Area Network), and more particularly to a portable device which is convenient to detect the signal strength of each point in the wireless LAN. The device is used to detect the signal of wireless LAN on each frequency channel, such as home RF, blue tooth and frequency hopping, etc.

### BACKGROUND OF THE INVENTION

The LAN have developed to wireless LAN. Comparing to the traditional LAN, the wireless LAN have some advantages. For example, the wire allocation will be reduced, and a terminal equipment can be put into anywhere the wireless signal is reachable. In a wireless LAN, a portable computer ( for example a notebook) at each corner can easily connect to a host. This is convenient to the portable computer. The portable computer will not be required a network line for the connection with the host. Therefore, the potential in future of wireless LAN will be better than the traditional LAN.

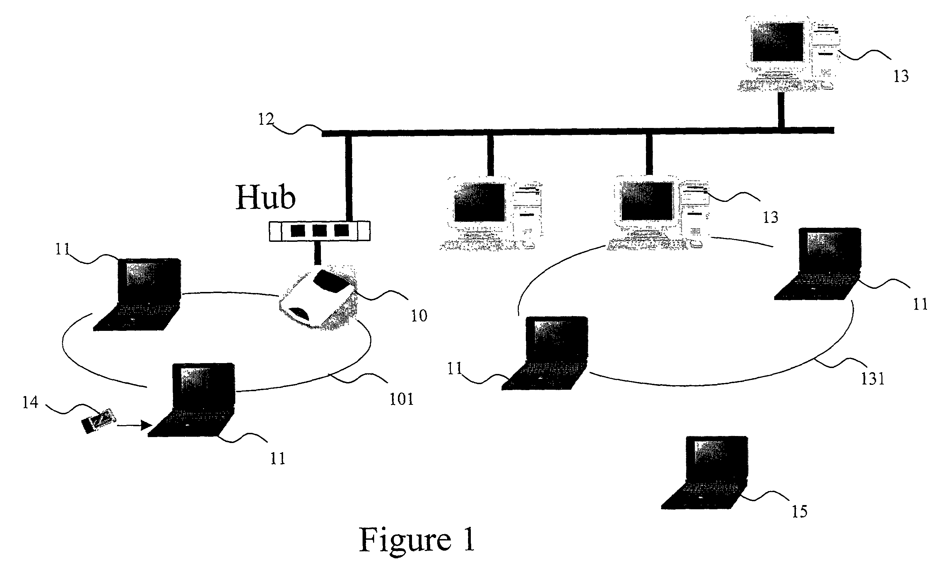

Fig. 1 shows the structure of the conventional wireless LAN. The conventional wireless LAN have several wireless client 11 which can communicate with other client 11 through an access point (AP) 10 or communicate with each host 13 in the traditional LAN through a hub. A wireless client 11 can also connect to the traditional LAN through a host 13, and further connect to a external network ( for example the internet). The allocation of each wireless client 11 haven't the constraint on the space where the wireless signal can reach, therefore the communication by wireless signal is more convenient than that by line transmission signal. In the aspect of hardware requirement, the user only need to construct an AP base station or add an AP interface on the host and add a wireless LAN card 14 on the wireless client, so that a client can easily connect with a host by wireless signal. In the signal distribution range 101 and 131, each wireless client can communicate with each host or other wireless client 11, but the wireless client 15 outside the signal distribution range can only operate independently and can't communicate with any host 13 or wireless client 11.

The allocation of each AP 10 or host 13 will bring the change of signal strength to each point in a room. Therefore, when a wireless LAN is constructed, the allocation of hosts and APs must be sure that the signal strength at each point is enough to communicate well, so how to allocate APs in a room or a office is an important subject in wireless LAN.

The skill in prior art about the allocation of APs always depend on experience, and additionally, a frequency spectrum analyzer is employed to obtained the signal strength. The size and weight of a frequency spectrum analyzer is always large, so it is not convenient to be taken around a room or office for detecting the signal strength.

### SUMMARY OF THE INVENTION

An object of the present invention is to provide a palm type device for the wireless signal detection in a wireless LAN.

Another object of the present invention is to provide a palm type device for allocating a AP to the best position.

Another object of the present invention is to provide a useful message on the LCD panel for the construction of a wireless LAN.

According to the present invention, a device for detecting a signal in a wireless local area network comprising : a portable entity for being taken by a user to find a strength of the signal at a point in the wireless local area network; a wireless transceiver located in the portable entity for receiving the signal; a controller located in the portable entity and electrically connected to the wireless transceiver for processing the signal and producing a result; and a controllable panel located on the portable entity and electrically connected to the controller for displaying a message about a distribution status of the signal to the user according the result.

In accordance with one aspect of the present invention, the wireless local area network having several hosts.

In accordance with one aspect of the present invention, a host is an access point.

In accordance with one aspect of the present invention, the portable entity is a palm type portable entity.

In accordance with one aspect of the present invention, the point is in a room.

In accordance with one aspect of the present invention, the point is in an office.

In accordance with one aspect of the present invention, the wireless transceiver is a wireless radio frequency transceiver.

In accordance with one aspect of the present invention, the controller is a microprocessor.

In accordance with one aspect of the present invention, the controllable panel is a touch-controllable panel.

In accordance with one aspect of the present invention, the message including a sound, a light, and a vibration.

The present invention may best be understood through the following description with reference to the accompanying drawings, in which:

### BRIEF DESCRIPTION OF THE DRAWINGS

Fig. 1 is a conventional wireless LAN architecture diagram;
Fig. 2 is a system schematic diagram according to the present invention;
Fig. 3 is a wireless LAN allocation schematic diagram according to the present invention; and
Fig. 4 is a wireless signal detection according to the present invention.

### DETAILED DESCRIPTION OF THE PREFERRED EMBODIMENT

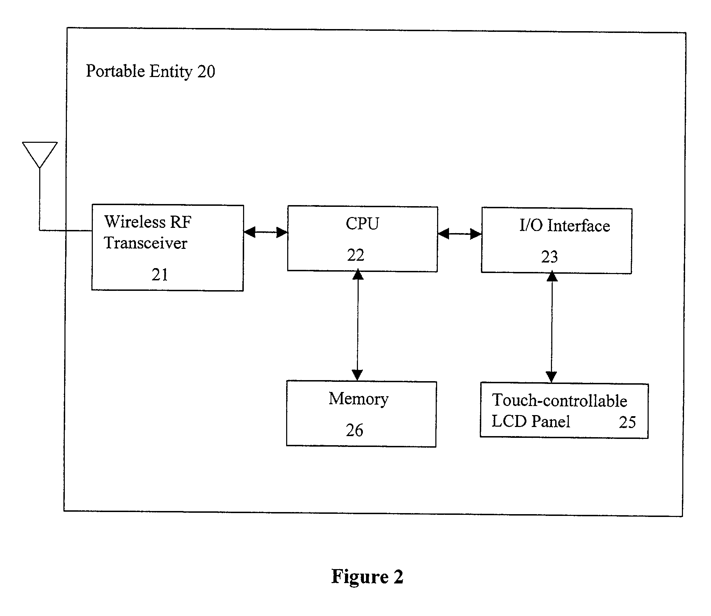

Please refer to Fig. 2 showing the system schematic diagram which includes the portable entity 20, the wireless RF transceiver 21, the microprocessor having the CPU 22 and memories 26, and the touch-controllable LCD panel 25 which is electrically connected to the CPU 22 by the input/output (I/O) interface. The I/O interface 23 may be RJ45, RS-232 or USB. The portable entity 20 may connnect to a computer through the connector of RJ45, RS-232 or USB. A user can take the portable entity 20 around a room or a office for detecting the wireless signal strength of a wireless LAN. The wireless RF transceiver 21 is allocated in the portable entity for transmitting and receiving the wireless signal. The CPU 22 and memories 26 is allocated in the portable entity and electrically connected to the wireless RF transceiver 21 for processing the signal and producing a result to display on the touch-controllable LCD panel 25. The user can judge the signal distribution status from the message displayed on the touch-controllable LCD panel 25.

A wireless LAN may include several hosts. A host may be as a AP so each host can also communicate each other by the wireless method. In the present invention, the portable entity is of palm type. The use can put on the palm to look or detect the wireless signal strength everywhere.

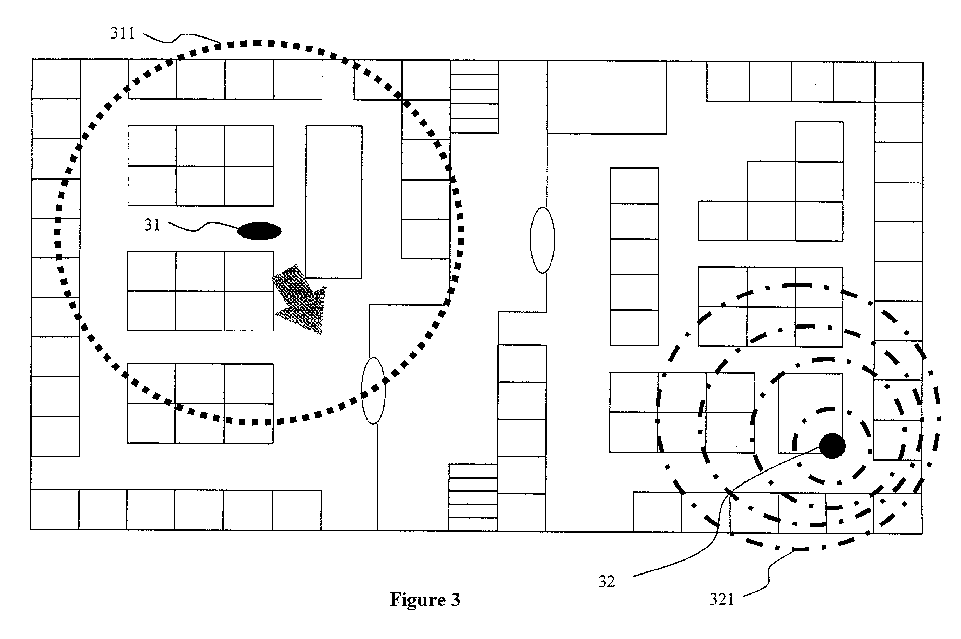

Please refer to Fig. 3 showing the wireless signal detection device 31 can be easily take to detect the wireless signal distribution status around a room or a office. It is implemented as the palm type, or can be combined into a PDA (person digital assistant). The noise source 32 in the corner can be found when the detection range 311 of the wireless signal detection device 31 is closed. The noise 321 propagating from the noise source 32 will be detected by the wireless signal detection device 31. This means that a shielding is required to isolate the noise from a wireless LAN.

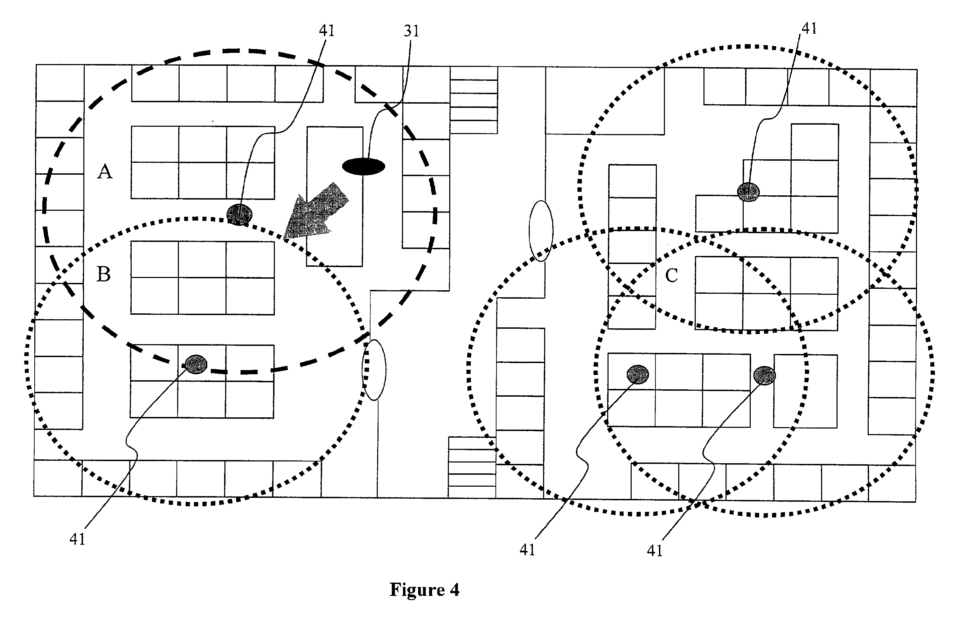

Please refer to Fig. 4 showing the wireless signal detection. The wireless signal detection device 31 can detect the signal strength, the address of an AP 41, and the data rate. Additionally, it can also detect how many APs are linked under the position of itself, and accordingly, the communication channel of each AP may be adjust suitably. For example, under the position A, the detection device 31 can find one AP 41; under the position B, it can find two APs 41; and under the position C, it can find three APs 41. The position of each AP 41 may be moved or a new AP may be increased where the wireless signal is not reachable. The detection device can detect the communication quality and wireless signal distribution status of the wireless LAN, so the troubles in the allocation and construction can be easily shot.
While the invention has been described in terms of what are presently considered to be the most practical and preferred embodiments, it is to be understood that the invention need not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A device for detecting a signal in a wireless local area network comprising
a portable entity for being taken by a user to find a strength of said signal at a point in said wireless local area network;
a wireless transceiver located in said portable entity for receiving said signal;
a controller located in said portable entity and electrically connected to said wireless transceiver for processing said signal and producing a result; and
a controllable panel located on said portable entity and electrically connected to said controller for displaying a message about a distribution status of said signal to said user according said result.

2. A device according to Claim 1 wherein said wireless local area network having several hosts.

3. A device according to Claim 2 wherein a host is an access point.

4. A device according to Claim 1 wherein said portable entity is a palm type portable entity.

5. A device according to Claim 1 wherein said point is in a room.

6. A device according to Claim 1 wherein said point is in an office.

7. A device according to Claim 1 wherein said wireless transceiver is a wireless radio frequency transceiver.

8. A device according to Claim 1 wherein said controller is a microprocessor.

9. A device according to Claim 1 wherein said controllable panel is a touch-controllable panel.

10. A device according to Claim 1 wherein said message including a sound, a light, and a vibration.
